# EUROPÄISCHE PATENTANMELDUNG

(11) **EP 4 752 419 A1**
(43) Veröffentlichungstag der Anmeldung: **03.06.2026**
(21) Anmeldenummer: 24216655.1
(22) Anmeldetag: 29.11.2024
(51) Int. Cl.: F16L 27/12, F24D 19/04, F24D 19/00

(54) **FITTING MIT BAJONETTVERSCHLUSS**

(71) Anmelder: Sokotherm GmbH, 56370 Bremberg (DE)
(72) Erfinder: Hering, Marcel, 57627 Hachenburg (DE); Herzmann, Marco, 56414 Salz (DE)
(74) Vertreter: Eisenführ Speiser

(57) **Zusammenfassung**

Die Erfindung betrifft eine Leistenheizung (10) mit mindestens einem Heizmodul (100), welches eine erste und zweite Seite (110, 120) aufweist, welche jeweils im Wesentlichen gerade und parallel zueinander ausgestaltet sind, wobei das Heizmodul (100) eine dritte Seite (130) mit einer Mehrzahl von ersten Lamellen und eine vierte Seite (140) mit einer Mehrzahl von zweiten Lamellen und einem Arm (141), der beabstandet zu den zweiten Lamellen vorgesehen ist, aufweist, wobei das Heizmodul eine erste und zweite Längsbohrung (170, 180) zur Aufnahme eines Heizmediums aufweist, wobei jedes Heizmodul (100) einstückig in Form eines Aluminiumstrangpressverfahrens hergestellt ist.

## Beschreibung

Die vorliegende Erfindung betrifft ein Verbindungsstück für eine Leistenheizung sowie eine Leistenheizung mit einem solchen Verbindungsstück.

Zum Heizen von Gebäuden werden typischerweise Lamellenheizungen oder Fußbodenheizungen verwendet. Ein nachträglicher Einbau einer Fußbodenheizung ist oftmals nicht möglich. Eine alternative Möglichkeit der Beheizung von Räumen stellen Leistenheizungen bzw. eine Heizleiste dar.

Eine Leistenheizung ist insbesondere ein im Wesentlichen flaches Heizelement, welches bevorzugt die Form einer Fußleiste aufweist.

WO 2019/037923 A1 zeigt eine entsprechende Leistenheizung. Die Leistenheizung weist dabei verschiedene Module auf, welche zusammengesetzt als Heizeinheit fungieren. Die Module können aus Metall hergestellt werden und können Lamellen aufweisen. Sie können hierbei an einer Wand des zu beheizenden Raumes befestigt werden. Ein Abdeckelement kann dann auf die Module platziert werden. Das Abdeckelement stellt ein Blech dar und weist im oberen Bereich einen geneigten Abschnitt auf, welcher ermöglichen soll, dass erwärmte Luft an eine Raumwand, an welcher die Heizleiste befestigt ist, geleitet wird. Die Module der Leistenheizung können an Wandhaltern befestigt werden. Zwei der drei Module weisen eine Längsbohrung auf, welche dazu dient, Warmwasser als Vorlauf und kälteres Wasser als Rücklauf aufzunehmen.

Um derartige Module einer Leistenheizung miteinander zu verbinden werden Verbindungsstücke, sogenannte Fittings, verwendet.

Diese Fittings sind zumeist einteilig aus Metall ausgeführt.

Aufgabe der vorliegenden Erfindung ist es ein verbessertes Fitting bereitzustellen,

Die hierin beschriebenen Verbindungsstücke sind insbesondere für die Ecken (eines Raumes) sind vorgesehen.

Die Verbindungsstücke ermöglichen dabei nicht nur eine Installation der hierin beschriebenen Leistenheizung, beispielsweise über Eck, sondern dienen gleichzeitig als Kompensator für die Längenausdehnung des Profils bzw. für etwaige Montagefehler.

Gemäß einem Aspekt umfasst das Verbindungsstück ein erstes Verbindungselement und ein zweites Verbindungselement, wobei das erste Verbindungselement und das zweite Verbindungselement über einen Bajonettverschluss miteinander fluidleitend verbindbar sind.

Das Verbindungsstück ist also insbesondere mehrteilig ausgeführt und dazu eingerichtet, das Heizmedium von einem Heizmodul in ein anderes Heizmodul zu leiten. Bevorzugt ist das Verbindungsstück bzw. sind die Verbindungselemente und der Bajonettverschluss aus einem Metall und/oder Kunststoff ausgebildet.

Als Verbindungsstück bzw. Fitting (englisch für ,Beschlag', 'Verbindungsstück', Kleinteil', 'Armatur' deutscher Plural die Fittings) oder Rohrverbinder werden hierin Rohrleitungen verstanden, die überwiegend zur Herstellung von Rohrleitungsverbindungen dienen. Die Abmessungen vieler Fittings sind in Normen (EN, ANSI, GOST ...) festgelegt, so dass Rohre und Fittings verschiedener Hersteller kombiniert werden können. Rohrverbinder größeren Dimensionen bzw. bei geringerem Anspruch an die Passgenauigkeit werden auch als Formstücke bezeichnet, insbesondere solche aus Kunststoff.

Ein Bajonettverschluss ist eine schnell herstell- und lösbare mechanische Verbindung zweier zylindrischer Teile in ihrer Längsachse. Die Teile werden durch Ineinanderstecken und entgegengesetztes Drehen verbunden und so auch wieder getrennt. Das Teil, das über das andere geschoben wird, besitzt einen Längsschlitz, an dessen Ende sich rechtwinklig ein kurzer Querschlitz ansetzt. Das andere Teil besitzt dagegen einen Knopf, der in den Querschlitz eingeführt wird und dann die feste Verbindung bewirkt. Die Verbindung erfolgt über eine Steck-Dreh-Bewegung: Die beiden zu verbindenden Teile werden ineinander gesetzt; annähernd senkrecht zur Steckrichtung sind in beiden Teilen an der Verbindungsstelle längliche Erhebungen angebracht. Diese laufen jedoch nicht rundum, sondern sind unterbrochen (sonst wäre das Ineinanderstecken nicht möglich). Da die Erhebungen nun leicht schräg in der Ebene senkrecht zur Steckrichtung liegen, werden durch eine Drehbewegung beide Teile gegeneinandergepresst. Der Bajonettverschluss arbeitet also wie ein Gewinde. Manchmal (zum Beispiel bei Kamera-Objektiven) wird zur Sicherung der Verbindung zusätzlich eine Raste verwendet. Alternativ zum Verfahren der ineinandergreifenden Schienen kann auch eine entsprechend geformte Einbuchtung am einen und eine Ausbuchtung am anderen Teil verwendet werden (zum Beispiel bei BNC-Steckverbindern).

Gemäß einem weiteren Aspekt ist der Bajonettverschluss integraler Bestandteil des ersten und des zweiten Verbindungselementes. Hierfür weist das erste Verbindungselement beispielsweise einen Bajonettring mit Öffnungen auf und das zweite Verbindungselement die zu den Öffnungen passenden Bajonettstifte.

Gemäß einem weiteren Aspekt ist der Bajonettverschluss derart ausgebildet, dass das zweite Verbindungselement in dem ersten Verbindungselement zur Anlage kommt. Hierfür weist das erste Verbindungselement beispielsweise ein inneres Ende auf, welches einen größeren Durchmesser aufweist als das entsprechende innere Ende des zweiten Verbindungselementes.

Gemäß einem weiteren Aspekt ist der Bajonettverschluss derart ausgebildet, dass das zweite Verbindungselement im ersten Verbindungselement fluidleitend zur Anlage kommt.

Gemäß einem weiteren Aspekt ist der Bajonettverschluss derart ausgebildet, dass das zweite Verbindungselement ein Längsspiel im ersten Verbindungselement aufweist, welches orthogonal auf einer Drehachse des Bajonettverschlusses steht. Durch eben jenes Längsspiel dient das Verbindungselement gleichzeitig als ein Kompensator für die Längenausdehnung des Profils bzw. für etwaige Montagefehler. Die Längenausdehnung des Profils kommt insbesondere durch das Heizmedium zustande, welches die fluidleitenden Profile entsprechend erwähnt und so zu einer Ausdehnung der Profile führt. Durch den Aufbau des Bajonettverschlusses kann der Ausgleich laufend geschehen, insbesondere weil sich die Elemente auch nach der Installation horizontal zueinander bewegen können. Der hierin vorgeschlagene Bajonettverschluss ermöglicht also insbesondere eine ständige Anpassung im laufenden Betrieb, im Unterschied zu einmal einstellbaren Ausgleichsteilen oder einer Muffe.

Gemäß einem weiteren Aspekt ist das erste Verbindungselement und/oder das zweite Verbindungselement im Wesentlichen rohrförmig bzw. zylindrisch ausgebildet.

Gemäß einem weiteren Aspekt weist das zweite Verbindungselement eine Krümmung auf. Die Krümmung kann dabei beliebig sein. Insbesondere richtet sich die Krümmung dabei nach der Ecke bzw. der Wand. Bevorzugt ist die Krümmung im Wesentlichen 30°, 45° oder 90°. Bevorzugt ist die Krümmung frei einstellbar bzw. verstellbar und kann sich im laufenden Betrieb frei bewegen.

Gemäß einem weiteren Aspekt weist das erste Verbindungselement eine Verjüngung auf, die dazu eingerichtet ist, in einer Längsbohrung eines Heizmodul der Leistenheizung, wie hierin beschrieben, fluidleitend zur Anlage zu kommen.

Gemäß einem weiteren Aspekt ist das Verbindungsstück als Rohrverbinder bzw. Fitting ausgebildet ist, um zwei Heizmodule einer Leistenheizung über Eck zu verbinden.

Gemäß einem weiteren Aspekt sind die Verbindungselemente fluidleitend miteinander verbunden und/oder mittels Dichtungsringen abgedichtet.

Die Leistenheizung weist beispielsweise ein oder mehrere Heizmodule auf, die über die hierin beschriebenen Fittings bzw. Verbindungsstück fluidleitend verbunden sind.

Gemäß einem weiteren Aspekt umfasst die Leistenheizung mindestens ein Heizmodul, welches eine erste und zweite Seite aufweist, welche jeweils im Wesentlichen gerade und parallel zueinander ausgestaltet sind, wobei das Heizmodul eine dritte Seite mit einer Mehrzahl von ersten Lamellen und eine vierte Seite mit einer Mehrzahl von zweiten Lamellen und einem Arm, der beabstandet zu den zweiten Lamellen vorgesehen ist, aufweist, wobei das Heizmodul eine erste und zweite Längsbohrung zur Aufnahme eines Heizmediums aufweist, wobei jedes Heizmodul einstückig in Form eines Aluminiumstrangpressverfahrens hergestellt ist.

Gemäß einem weiteren Aspekt weist das Heizmodul ein Gewicht von zwischen 2 und 3 Kilogramm pro Meter auf.

Gemäß einem weiteren Aspekt weist das Heizmodul eine spezifische Norm-Wärmeleistung von zwischen 125 und 140 Watt pro Meter und insbesondere eine spezifische Norm-Wärmeleistung von ca. 130 Watt pro Meter auf.

Gemäß einem weiteren Aspekt ist der Arm an seiner Außenseite gerade ausgestaltet und an seiner gegenüberliegenden Seite einen gebogenen Abschnitt auf, welcher zu den zweiten Lamellen weist.

Gemäß einem weiteren Aspekt weist eine Oberfläche der ersten Lamellen, eine Oberfläche der zweiten Lamellen und/oder eine Oberfläche eines gebogenen Abschnitts des Arms jeweils eine Riffelung auf.

Gemäß einem weiteren Aspekt umfasst die Leistenheizung ferner einen mittleren Abschnitt mit einem ersten Ende an der ersten Seite und einem zweiten Ende an der zweiten Seite, wobei der mittlere Abschnitt als Kabelkanal dienen kann.

Gemäß einem weiteren Aspekt ist das zweite Ende des mittleren Abschnitts offen oder verschlossen ausgestaltet.

Gemäß einem weiteren Aspekt weist das Heizmodul eine Tiefe auf, wobei die Länge des Arms gemessen von der zweiten Seite an im Wesentlichen der Tiefe des Heizmoduls entspricht.

Gemäß einem weiteren Aspekt weist eine Außenseite des Arms einen Winkel zur zweiten Seite von zwischen 90° und 100° auf.

Gemäß einem weiteren Aspekt umfasst die Leistenheizung ferner mindestens einen Haltebügel, welcher an einer Wand befestigbar ist, wobei der mindestens einen Haltebügel an der ersten Seite des Heizmoduls befestigt ist, so dass zwischen der ersten Seite des Heizmoduls und der Wand ein Abstand vorhanden ist, der durch den Haltebügel bestimmt wird.

Gemäß einem Aspekt der vorliegenden Erfindung weist die Leistenheizung mindestens ein einstückiges Heizmodul auf. In diesem Heizmodul sind Bohrungen für den Warmwasserzulauf und Bohrungen für den Rücklauf vorgesehen. Das Modul kann eine erste und zweite gegenüberliegende und im Wesentlichen parallel zueinander angeordnete Seite aufweisen. Die erste Seite kann mittels Haltern an einer Wand des zu beheizenden Raumes befestigt werden. Die erste Seite ist im Wesentlichen gerade ausgestaltet und kann optional eine Riffelung aufweisen oder glatt ausgestaltet sein. Die zweite Seite ist im Wesentlichen ebenfalls gerade ausgestaltet und kann optional eine Riffelung aufweisen oder glatt ausgestaltet sein. An einer dritten Seite (zwischen der ersten und zweiten Seite) ist eine Mehrzahl von ersten Lamellen vorgesehen. An einer vierten Seite (zwischen der ersten und zweiten Seite) ist ebenfalls eine Mehrzahl von zweiten Lamellen sowie ein Arm vorgesehen. Im montierten Zustand weist die dritte Seite nach unten und die vierte Seite nach oben. Der Arm stellt damit ein oberes Ende des Moduls dar. Zwischen dem Arm und den Lamellen der vierten Seite ist ein Abstand vorhanden, so dass hier ein Luftvolumen gebildet ist. Das Heizmodul wird in Aluminiumstrangpressen einstückig hergestellt.

Die Ausgestaltung des Heizmoduls und insbesondere das Vorsehen des Arms an der vierten Seite (oben) ist vorteilhaft, da dadurch die Stoßfestigkeit der Leistenheizung verbessert wird. Ferner wird die mechanische Stabilität des Heizmoduls verbessert. Des Weiteren wird eine Verletzungsgefahr durch das Heizmodul auf Grund seiner kompakten Bauform und durch das Vorsehen des Arms erheblich reduziert.

Gemäß einem Aspekt der vorliegenden Erfindung weist der Arm an einer Außenseite eine gerade Fläche und an der gegenüberliegenden Seite eine gebogene Fläche auf. Die gebogene Fläche liegt gegenüber den Lamellen des vierten Endes und begrenzt das Volumen zwischen dem Arm und den Lamellen des vierten Endes.

Gemäß einem Aspekt der vorliegenden Erfindung beträgt die Masse des Heizmoduls zwischen zwei und drei Kilogramm pro Meter, bevorzugt 2,44 kg pro Meter. Ein Wasserinhalt eines Moduls beträgt zwischen 0,4 und 0,6 Liter pro Meter und insbesondere 0,51 Liter pro Meter.

Gemäß einem Aspekt der vorliegenden Erfindung weist die Wärmeleistung eines Moduls zwischen 120 und 140 Watt pro Meter und insbesondere ca. 130 Watt pro Meter auf.

Gemäß einem Aspekt der vorliegenden Erfindung weist die Leistenheizung mindestens ein Heizmodul auf, welches über Haltebügel an einer Wand befestigt werden können. Die Haltebügel weisen einen Fuß auf, welcher auf dem Boden des Raumes platziert werden kann. Der Körper des Haltebügels wird dann an einer Wand verschraubt. Die Heizmodule können dann auf dem Haltebügelfuß platziert werden.

Gemäß einem weiteren Aspekt der vorliegenden Erfindung weist die Leistenheizung mindestens eine und vorzugsweise zwei Haltefedern auf, welche als Sicherung von Rohrverbindungen von zwei Heizmodulen oder zwischen den ersten und zweiten Längsbohrungen verwendet wird. Eine Haltefeder dient dazu, Anschlussrohre am Heizkreislauf abzusichern und eine zweite Haltefeder dient dazu, eine Umleitung abzusichern.

Gemäß einem Aspekt der vorliegenden Erfindung können die Haltefedern aus Kunststoff hergestellt werden.

Gemäß einem Aspekt der vorliegenden Erfindung dienen die Haltebügel zum einen der Befestigung der Heizmodule. Ferner geben diese Bügel jedoch ebenfalls einen Abstand zwischen den Heizmodulen vom Boden und zur Wand hin vor, um eine Zirkulation der erwärmten Luft zu ermöglichen. Die Haltebügel können Arme aufweisen, welche dazu dienen, in entsprechenden Ausnehmungen des Heizmoduls befestigt zu werden.

Durch die Ausgestaltung des Heizmoduls (und insbesondere des Arms) wird die Handhabung des Moduls bei der Montage verbessert. Insbesondere wird es einfacher, das Heizmodul auf die benötigte Länge zurecht zu schneiden. Gemäß einem Aspekt der Erfindung dient der Arm der Luftlenkung, d.h. der Lenkung der erwärmten Luft.

Gemäß einem Aspekt der Erfindung soll das Gewicht des Heizkörpers nicht zu hoch sein, damit der Heizkörper noch moniert werden kann. Es erfolgt somit eine Abwägung zwischen Wärmeleitfähigkeit und Montagefähigkeit.

Gemäß einem Aspekt der Erfindung kann die Leistenheizung durch eine gezielte Erwärmung des Sockelbereichs die Raumlufthygiene verbessern. Beispielsweise kann dadurch eine Temperaturanhebung im Sockelbereich ermöglicht werden. Bei ungedämmten Altbauhäusern kann somit bei erdberührten Außenwänden eine Unterschreitung der Taupunkttemperatur vermieden werden.

Durch den Arm wird die Luft entlang der Wand geführt. Dadurch wird die Wand nicht nur im Bereich des Sockels erwärmt, sondern über die gesamte Höhe, wodurch die Unterschreitung des Taupunkts auch in den Ecken unterhalb der Wand vermieden wird, was Schimmel vermeidet.

Gemäß einem weiteren Aspekt der Erfindung ermöglicht die Leistenheizung eine homogenere Temperaturverteilung über die Raumhöhe. Hierbei kann insbesondere das lokale Behaglichkeitsempfinden verbessert werden.

Gemäß einem weiteren Aspekt der Erfindung weist eine Außenseite des Arms einen Winkel zur zweiten Seite von zwischen 90° und 100° auf.

Gemäß einem weiteren Aspekt der Erfindung weist die Leistenheizung mindestens einen Haltebügel auf, welcher an einer Wand (800) befestigbar ist. Der mindestens eine Haltebügel ist an der ersten Seite des Heizmoduls befestigt, so dass zwischen der ersten Seite des Heizmoduls und der Wand ein Abstand vorhanden ist, der durch den Haltebügel bestimmt wird.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische und perspektivische Ansicht einer Leistenheizung gemäß einem ersten Ausführungsbeispiel der Erfindung,
- Fig. 2: zeigt eine perspektivische und schematische Darstellung einer Rückseite einer Leistenheizung gemäß dem ersten Ausführungsbeispiel,
- Fig. 3: zeigt eine weitere schematische Ansicht einer Rückseite der Leistenheizung gemäß dem ersten Ausführungsbeispiel,
- Fig. 4: zeigt eine Ansicht einer Haltefeder für eine Leistenheizung gemäß dem ersten Ausführungsbeispiel,
- Fig. 5: zeigt einen schematischen Querschnitt eines Heizmoduls für eine Leistenheizung gemäß dem ersten Ausführungsbeispiel,
- Fig. 6: zeigt eine Ansicht eines Haltebügels gemäß der Erfindung
- Fig. 7: zeigt ein erstes Verbindungselement in einer Ausführungsform,
- Fig. 8: zeigt ein zweites Verbindungselement in einer ersten Ausführungsform,
- Fig. 9: zeigt ein zweites Verbindungselement in zweiten Ausführungsform,
- Fig. 10: zeigt ein Verbindungsstück in einer bevorzugten Ausführungsform, und
- Fig. 11: zeigt eine Leistenheizung in einer weiteren Ausführungsform.

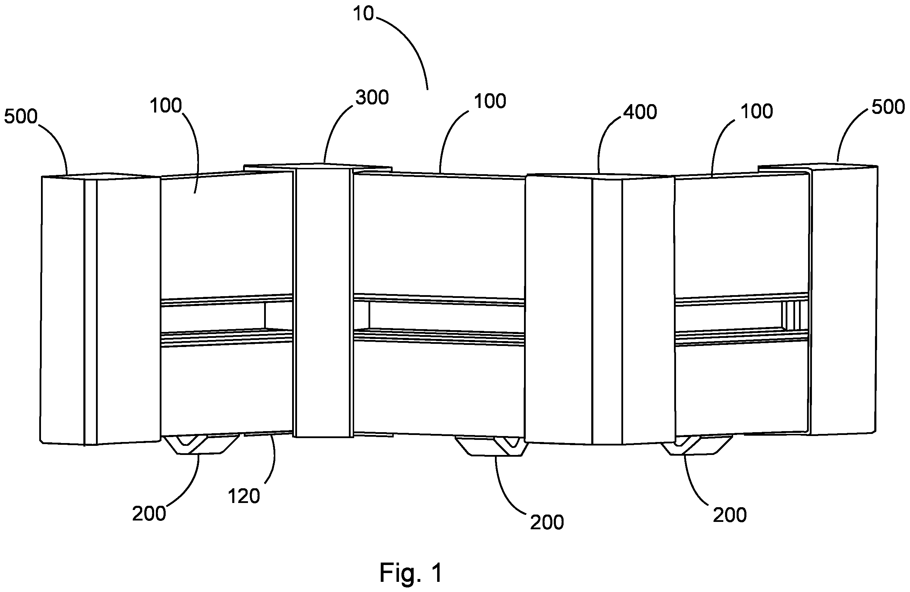

Fig. 1 zeigt eine schematische und perspektivische Ansicht einer Leistenheizung gemäß einem ersten Ausführungsbeispiel der Erfindung. Die Leistenheizung 10 weist mindestens ein Heizmodul 100, optional Eckabdeckungen 300, 400, optional Endkappen 500 sowie eine Mehrzahl von Haltebügeln 200 auf.

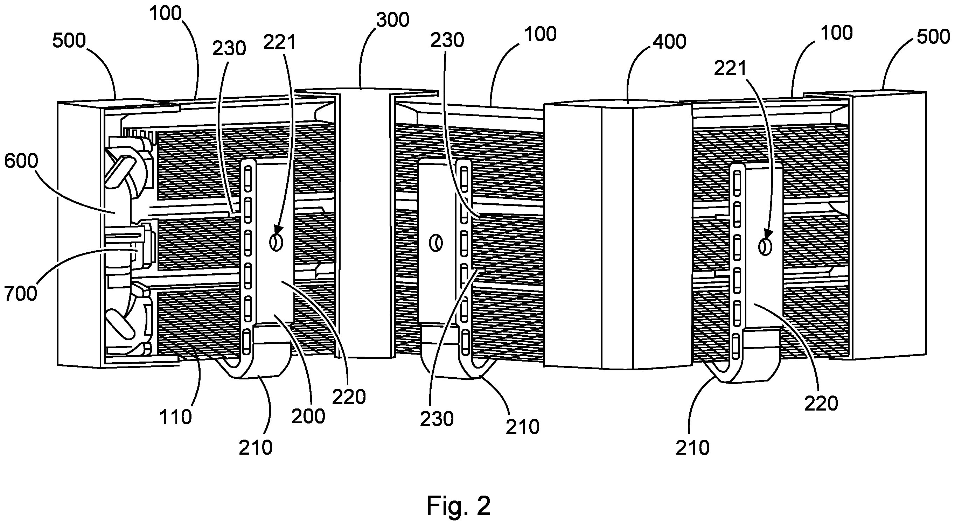

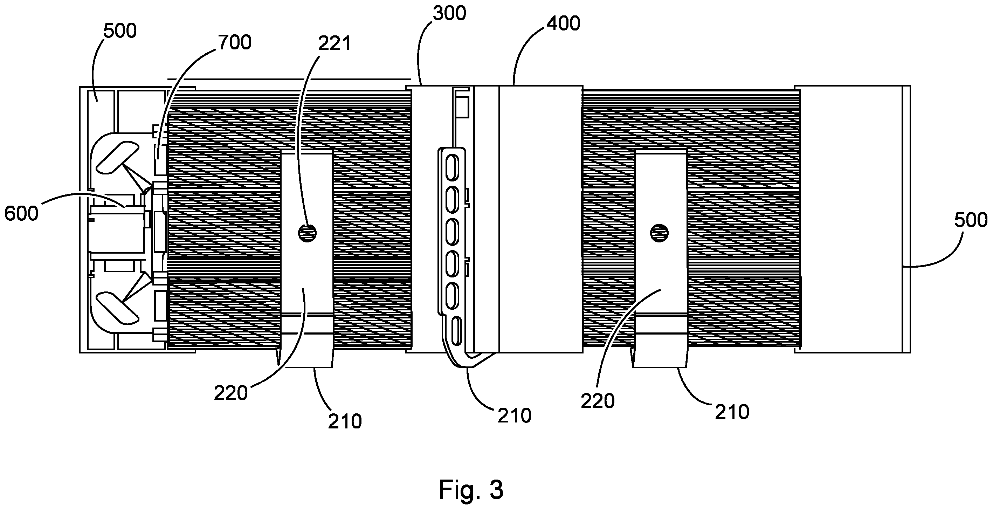

Fig. 1 zeigt eine Vorderseite einer Leistenheizung und die Figuren 2 und 3 zeigen eine Rückseite der Leistenheizung in zwei unterschiedlichen Perspektiven.

Die Leistenheizung aus Fig. 1 stellt lediglich eine exemplarische Darstellung der Leistenheizung dar. Die Heizmodule 100 weisen an ihrer Rückseite Ausnehmungen auf, welche dazu dienen, an einem Haltebügel 200 befestigt zu werden. Der Haltebügel 200 weist einen Fuß 210 und einen Haltekörper 220 mit einer Bohrung 221 auf. Ferner kann der Haltebügel 200 eine Mehrzahl von Armen 230 aufweisen, welche in Ausnehmungen an einer Rückseite des Heizmoduls 100 befestigt werden können. Mit anderen Worten, ein Heizmodul kann nachdem der Haltebügel an einer Wand 800 montiert ist, auf dem Haltefuß 210 platziert werden und die Rückseite des Heizmoduls 100 kann mittels der Arme des Haltebügels 200 montiert werden. Durch die Dicke des Haltekörpers 220 des Haltebügels 200 wird der Abstand zwischen dem Heizmodul und der Wand 800 festgelegt.

Das Heizmodul 100 weist eine erste und eine zweite Längsbohrung zur Aufnahme des Heizmediums, z. B. Wasser, auf. An einem Ende eines Heizmoduls können Rohrverbinder und Fittinge 600 vorgesehen sein, welche mittels der Haltefeder 700 gehalten werden können. Durch die Haltefeder 700 kann ein unbeabsichtigtes Entfernen der Rohrverbinder vermieden werden.

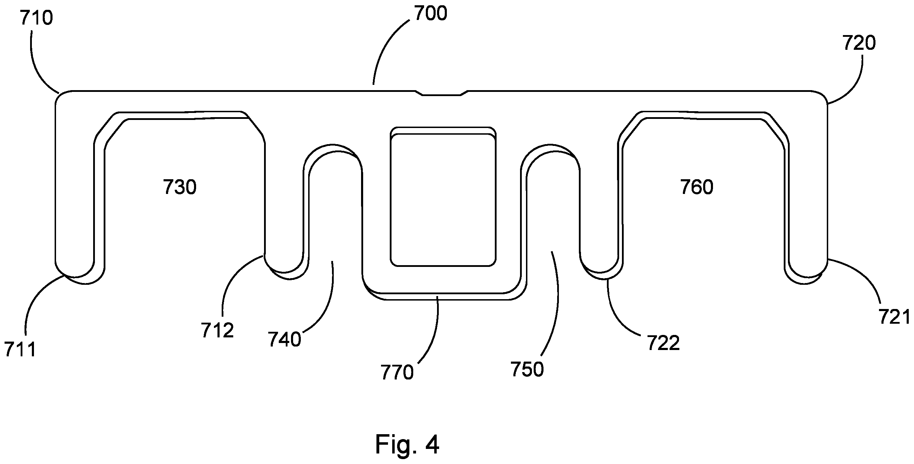

Fig. 4 zeigt eine Ansicht einer Haltefeder für eine Leistenheizung gemäß dem ersten Ausführungsbeispiel. In Fig. 4 ist insbesondere eine Haltefeder 700 dargestellt. Die Haltefeder 700 weist ein erstes Ende 710 und ein zweites Ende 720 auf. An dem ersten Ende 710 ist ein erster Arm 711 und an dem zweiten Ende 720 ist ein zweiter Arm 721 vorgesehen. Ferner ist ein dritter Arm 712 parallel zum ersten Arm 711 und ein vierter Arm 722 parallel zum zweiten Arm 721 vorgesehen. Im Wesentlichen in der Mitte der Haltefeder 700 kann ein mittlerer Abschnitt 770 vorgesehen sein. Zwischen dem ersten und dritten Arm 711, 712 kann ein erster Abschnitt 730 und zwischen dem dritten Arm 712 und dem mittleren Abschnitt 770 kann ein zweiter Abschnitt 740 vorgesehen sein. Zwischen dem mittleren Abschnitt 770 und dem vierten Arm 722 kann ein dritter Abschnitt 760 und zwischen dem zweiten und vierten Arm 721, 722 kann ein vierter Arm 760 vorgesehen sein.

Optional kann die Haltefeder 700 aus Kunststoff hergestellt sein. Dies ist vorteilhaft, weil damit Geräusche zwischen der Haltefeder und den Rohrverbindern beim Betrieb der Leistenheizung aufgrund von unterschiedlichen Wärmeausdehnungskoeffizienten vermieden werden.

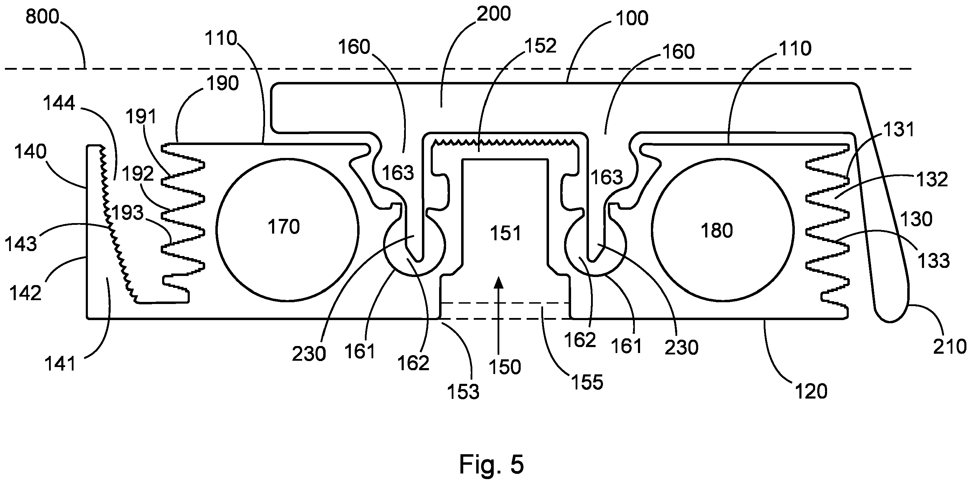

Fig. 5 zeigt einen Querschnitt eines Heizmoduls 100. Das Heizmodul 100 weist eine erste Seite 110 (Rückseite), eine zweite Seite 120 (Vorderseite), eine dritte Seite 130 (untere Seite) und eine vierte Seite 140 (obere Seite) auf. Die erste Seite 110 ist im Wesentlichen gerade ausgestaltet. Die erste Seite 110 kann glatt ausgestaltet sein oder eine Riffelung aufweisen. Die zweite Seite 120 ist ebenfalls im Wesentlichen gerade ausgestaltet und ist parallel zur ersten Seite 110 angeordnet. Die erste Seite 110 kann glatt ausgestaltet sein oder eine Riffelung aufweisen. Zwischen der ersten und zweiten Seite 110, 120 sind eine erste und zweite Längsbohrung 170, 180 vorgesehen. Diese Bohrungen 170, 180 dienen der Aufnahme des Heizfluids, beispielsweise Wasser.

Die dritte Seite 130 weist eine Mehrzahl von ersten Lamellen 131 auf. Diese ersten Lamellen weisen Lamellenberge 133 und Lamellentäler 132 auf. Optional kann eine Oberfläche der Lamellen weitere kleinere dritte Lamellen aufweisen. Dies dient der Vergrößerung der Oberfläche des Heizmoduls.

Optional kann zwischen den beiden Längsbohrungen 170, 180 ein mittlerer Bereich 150 sowie zwei Befestigungsabschnitte 160 vorgesehen sein. Die Befestigungsabschnitte 160 sind zur ersten Seite 110 hin offen und der mittlere Abschnitt 150 kann zur zweiten Seite 120 hin offen sein. Optional kann der mittlere Abschnitt 150 verschlossen sein. Optional kann der mittlere Abschnitt 150 z. B. durch einen Steg 155 (in Fig. 5 gestrichelt dargestellt) verschlossen sein. In diesem Fall ist die zweite Seite 120 durchgängig.

Die vierte Seite 140 weist analog zu der dritten Seite 130 eine Mehrzahl von zweiten Lamellen 190 mit Lamellenbergen 191 und Lamellentälern 192 auf. Die Oberflächen dieser Lamellen können weitere dritte Lamellen 193 zur Vergrößerung der Oberfläche aufweisen. Ferner weist die vierte Seite 140 einen Arm 143 auf, welcher sich von der zweiten Seite 120 zur ersten Seite 110 hin erstreckt. Der Arm 141 weist an seiner Außenseite 142 eine glatte Oberfläche und nach innen einen gebogenen Abschnitt 143 auf. Optional kann der gebogene Abschnitt 143 weitere Lamellen zur Vergrößerung der Oberfläche aufweisen. Zwischen dem gebogenen Abschnitt 143 und den Lamellen 190 des ersten Endes ist ein Volumen 144 vorhanden.

Optional entspricht die Länge des Arms 141 im Wesentlichen der Tiefe des Heizmoduls, so dass ein Luftvolumen 144 durch den gebogenen Abschnitt 143 und die Lamellen 190 begrenzt wird, wenn das Heizmodul montiert ist.

Die Abschnitte 160 dienen optional der Aufnahme von Haltearmen 230 des Haltebügels 200.

Der Abschnitt 150 kann ein erstes Ende 152 und ein Volumen 151 mit einem offenen zweiten Ende 155 aufweisen. Der Abschnitt 150 kann zur Aufnahme von Leitungen oder Beleuchtungselementen verwendet werden. Optional kann der mittlere Abschnitt 150 bzw. sein zweites Ende 153 einen Steg 155 aufweisen, der das Volumen 151 verschließt.

Die Außenseite 142 des Arms 140 kann einen Winkel zur zweiten Seite 120 von zwischen 90° und 100° aufweisen.

Durch die Ausgestaltung des Arms 140, der sich optional über die gesamte Tiefe des Heizmoduls 100 erstreckt, kann eine Verschmutzung oder Verstaubung in dem Heizmodul erheblich reduziert werden. Schmutz und insbesondere Staub fällt dann auf den Arm 140. Der Arm 140 kann somit Verschmutzungen und Staub effektiv abgehalten. Die Verschmutzungen und der Staub können auf einfache Art und Weise vom Arm 140 entfernt werden. In das Innere des Heizmoduls110 kann Verschmutzung und Staub lediglich durch den Spalt zwischen dem Heizmodul und der Wand gelangen. Dieser Spalt wird durch die Dicke des Haltekörpers 200 des Haltebügels festgelegt. Falls dennoch zu viel Staub in das Innere des Heizmoduls (insbesondere in das Volumen zwischen den Lamellen 190 und dem Arm 141) gelangen sollte, so kann dieser Staub durch einen Staubsauger, der an dem Spalt positioniert ist, entfernt werden.

Durch das Vorsehen des Arm an der oberen Seite des Heizmoduls wird die Heizleistung des Moduls auch langfristig nicht beeinträchtigt. Ansonsten kann es dazu kommen, dass sich Staub auf den zweiten Lamellen festsetzt, was zu einer Beeinträchtigung der Wärmeübertragung an dem Übergang zwischen den Lamellen und der Luft führen kann.

Der Arm dient vorteilhafterweise dazu, erwärmte Luft zur Wand hinzulenken.

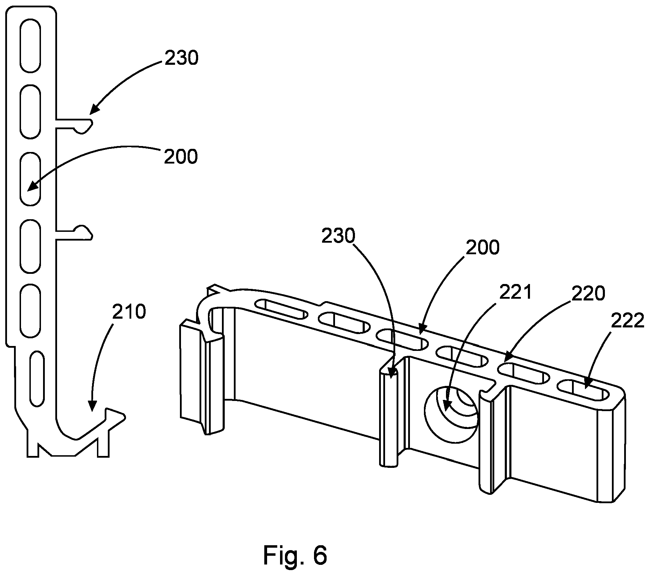

Fig. 6 zeigt eine Ansicht eines Haltebügels gemäß der Erfindung. Der Haltbügel 200 weist einen Haltefuß 210, einen Haltekörper 220, eine Bohrung 221, und Arme 230 auf. In dem Haltekörper 220 können von beiden Seiten oder von einer Seite Ausnehmungen oder Bohrungen 222 vorgesehen sein.

Der Haltebügel 200 kann mittels der Bohrung 221 und z. B. einer Schraube an einer Wand 800 befestigt werden. Die Dicke oder Tiefe des Haltekörpers 220 bestimmt die Entfernung des Heizmoduls 100 von der Wand 800.

Optional wird der Bügel nicht über die gesamte Fläche des Moduls befestigt. Vielmehr kann der Haltebügel z.B. in einem Abstand von 1m an der Wand befestigt sein. Somit unterscheidet sich die Befestigung des Heizmoduls von der Befestigung von Heizmodulen im Stand der Technik, bei denen die Haltetechnik flächig über die gesamte Länge der Leiste angebracht wird. Durch den Abstand zwischen den Haltebügeln in unserem Heizmodul wird die Luftzirkulation weiter begünstigt, da keine Halterungen im Weg sind. Außerdem können so bei der Installation Wandunebenheiten ausgeglichen werden.

Optional wird das Heizmodul 100 durch ein Aluminiumstrangpressen hergestellt. Das Gewicht des Heizmoduls beträgt zwischen 2 und 3 Kilogramm pro Meter, insbesondere 2,44 l/m. Ein Wasserinhalt eines Heizmoduls kann zwischen 0,4 und 0,6 Liter pro Meter, insbesondere ca. 0,5 l/m betragen.

Gemäß einem Aspekt der vorliegenden Erfindung beträgt die Höhe des Heizmoduls zwischen 80 und 110 mm. Vorzugsweise beträgt die Höhe des Moduls zwischen 90 und 100 mm, und insbesondere 97 mm. Optional kann eine Gesamtlänge eines Moduls zwischen 3000 und 6000 mm betragen. Vorzugsweise beträgt eine Gesamtlänge des Moduls 5000 mm.

Gemäß einem Aspekt der vorliegenden Erfindung weist die Tiefe des Moduls zwischen 15 und 30 mm und insbesondere ca. 20 mm auf.

Eine Norm-Wärmeleistung eines Moduls kann zwischen 400 und 700 Watt entsprechen. Eine spezifische Norm-Wärmeleistung eines Heizmoduls beträgt ca. 130 Watt pro Meter.

Gemäß einem Aspekt der Erfindung wurden bei einer Prüfung des Heizmoduls folgende Parameter bestimmt: Exponent n = 1,2102, Konstante Km = 3,675, spezifische Konstante K_{mL} = 1,148, spezifische Norm-Wärmeleistung W/m = 131, und spezifische Norm-Niedertemperatur-Wärmeleistung =70,4W/m. Hierbei gilt für die Wärmeleistung Φ= Km ΔTⁿ [W]

Gemäß einem Aspekt der Erfindung kann die Leistenheizung durch eine gezielte Erwärmung des Sockelbereichs die Raumlufthygiene verbessern. Beispielsweise kann dadurch eine Temperaturanhebung im Sockelbereich ermöglicht werden. Bei ungedämmten Altbauhäusern kann somit bei erdberührten Außenwänden eine Unterschreitung der Taupunkttemperatur vermieden werden. Dies wirkt sich vorteilhaft auf eine Reduzierung eines Schimmelpilzwachstums aus.

Gemäß einem weiteren Aspekt der Erfindung ermöglicht die Leistenheizung eine homogenere Temperaturverteilung über die Raumhöhe. Hierbei kann insbesondere das lokale Behaglichkeitsempfinden verbessert werden.

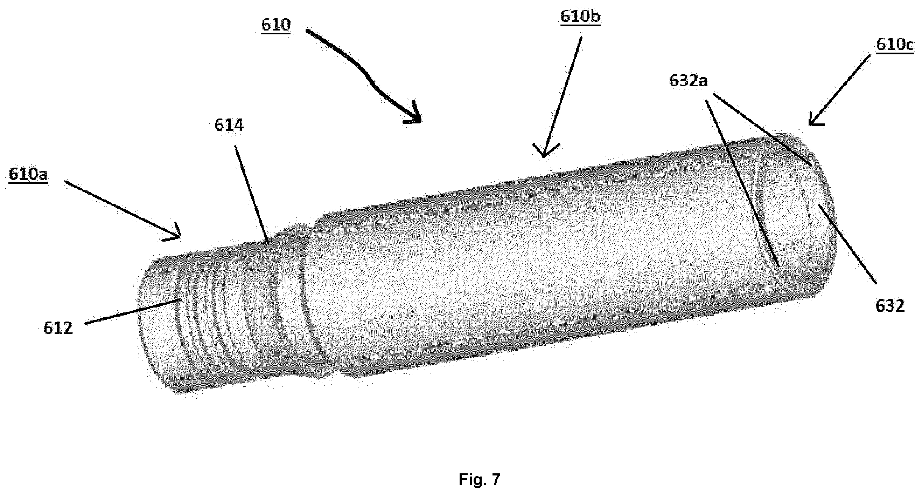

Fig. 7 zeigt ein erstes Verbindungselement 610 in einer Ausführungsform.

Das erste Verbindungselement 610 ist im Wesentlichen als zylindrischer Körper 610b ausgebildet und weist ein äußeres Ende 610a und ein inneres Ende 610c auf.

Das äußeres Ende 610a umfasst dabei eine Verjüngung 614, die insbesondere dazu eingerichtet ist, in einer Längsbohrung 170, 180 eines Heizmoduls 100 einer Leistenheizung, wie in den Figuren 1 bis 6 gezeigt, zur Anlage zu kommen. Hierfür weist das äußeres Ende 610a insbesondere einen kleineren Durchmesser auf als die Längsbohrung 170, 180. Bevorzugt weist das äußere Ende 610a zudem eine Aufnahme 612 für Dichtungsringe oder dergleichen auf.

Das innere Ende 610c weist einen Bajonettring 632 auf. Der Bajonettring 632 ist insbesondere dadurch gekennzeichnet, dass er zwei Öffnungen 632a für entsprechende Bajonettstifte aufweist.

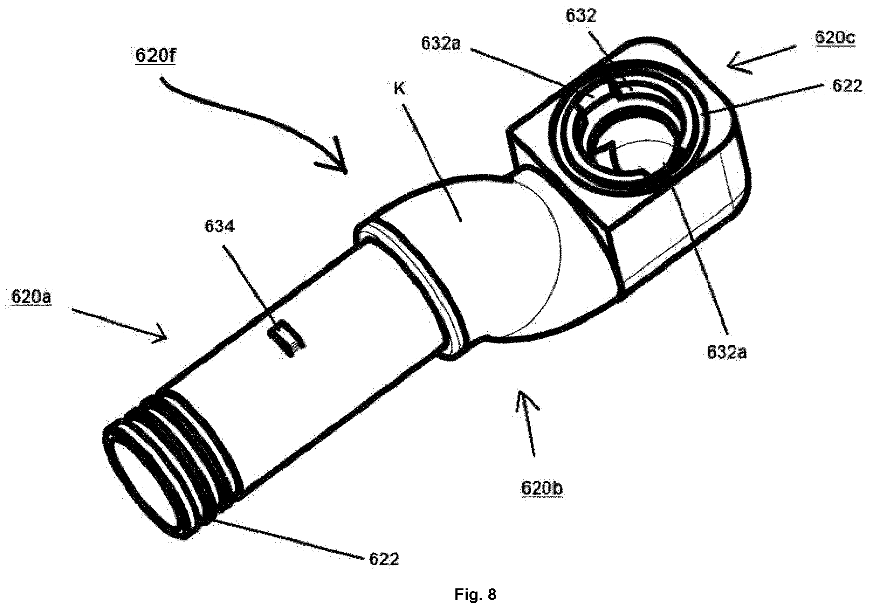

Fig. 8 zeigt ein zweites Verbindungselement 620 in einer Ausführungsform, insbesondere in einer weiblichen Ausführungsform 620f.

Das zweite Verbindungselement 620 ist abschnittweise als zylindrischer Körper 620b ausgebildet und weist ein äußeres Ende 620a und ein inneres Ende 620c auf. Zudem umfasst der zylindrische Körper 620b ein Krümmung K, die insbesondere so ausgeführt ist, dass die Öffnungen der Enden 620a, 620c orthogonal zueinander angeordnet sind.

Bevorzugt weist das äußere Ende 620a zudem eine Aufnahme 622 für Dichtungsringe oder dergleichen auf und ist dazu eingerichtet, mit einem einen Ende 610c eines ersten Verbindungsstückes 610 verbunden zu werden, wie beispielweise in Fig. 7 gezeigt.

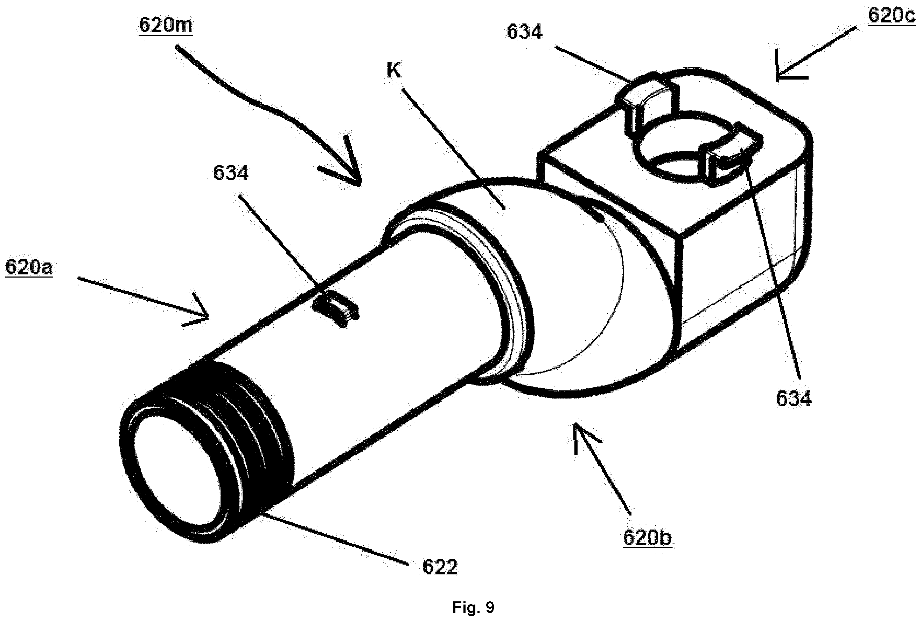

Am inneren Ende 620c ist zudem ein Bajonettring 632 nebst Öffnungen 632a, 632a vorgesehen, welcher dazu eingerichtet ist, Bajonettstifte 634 eines anderen zweiten Verbindungselementes 620, wie insbesondere in Fig. 9 gezeigt, aufzunehmen.

Fig. 9 zeigt ein zweites Verbindungselement 620 in einer Ausführungsform, insbesondere in einer männlichen Ausführungsform 620m.

Das zweite Verbindungselement 620 ist abschnittweise als zylindrischer Körper 620b ausgebildet und weist ein äußeres Ende 620a und ein inneres Ende 620c auf. Zudem umfasst der zylindrische Körper 620b ein Krümmung K, die insbesondere so ausgeführt ist, dass die Öffnungen der Enden 620a, 620c orthogonal zueinander angeordnet sind.

Bevorzugt weist das äußere Ende 620a zudem eine Aufnahme 622 für Dichtungsringe oder dergleichen auf und ist dazu eingerichtet, mit einem einen Ende 610c eines ersten Verbindungsstückes 610 verbunden zu werden, wie beispielweise in Fig. 7 gezeigt.

Am inneren Ende 620c sind zudem zwei Bajonettstifte 634, 634 angeordnet, um das zweite Verbindungselement mit einem anderen Verbindungselement 620, wie insbesondere in Fig. 8 gezeigt, zu verbinden.

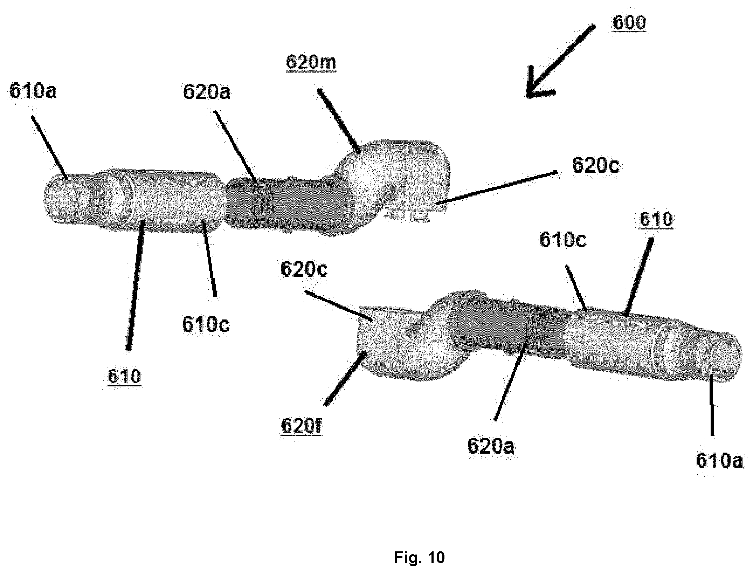

Fig. 10 zeigt ein Verbindungsstück 600 in einer bevorzugten Ausführungsform.

Das Verbindungsstück 600 umfasst zwei erste Verbindungselemente 610 sowie zwei zweite Verbindungselemente 620m, 620f.

Ein erstes Verbindungselemente 610 ist über das innere Ende 610c mit dem männlichen zweiten Verbindungselement 620m verbunden, insbesondere mit dem äußeren Ende 620a.

Ein zweites Verbindungselemente 610 ist über das innere Ende 610c mit dem weiblichen zweiten Verbindungselement 620f verbunden, insbesondere mit dem äußeren Ende 620a.

Das männliche zweite Verbindungselement 620m ist wiederum mit dem weiblichen zweiten Verbindungselement 620f über entsprechenden inneren Enden 620c verbunden.

Die Verbindung zwischen den Verbindungselementen 610, 610, 620f, 620m erfolgt dabei insbesondere jeweils über einen Bajonettverschluss, insbesondere wie in den Figuren 7 bis 9 gezeigt.

Die Verbindungselemente 610 sind bevorzugt so ausgeführt wie in Fig. 7 gezeigt. Das Verbindungselement 620f ist bevorzugt so ausgeführt wie in Fig. 8 gezeigt. Das Verbindungselement 620m ist bevorzugt so ausgeführt wie in Fig. 9 gezeigt

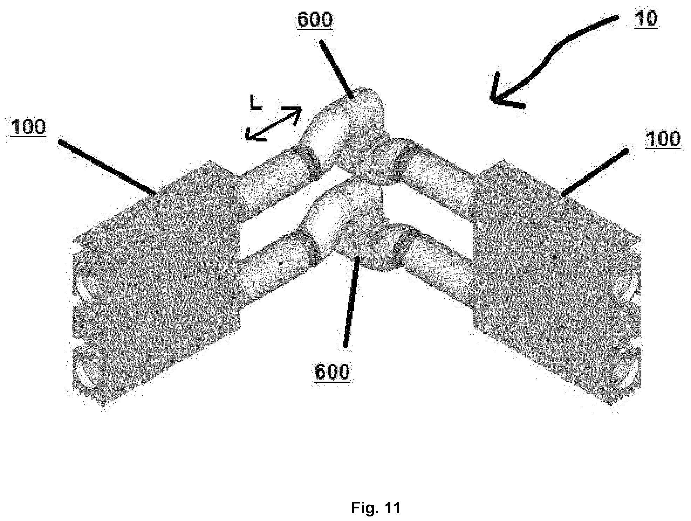

Fig. 11 zeigt einen Abschnitt einer Leistenheizung 10 in einer bevorzugten Ausführungsform.

Die Leistenheizung 10 umfasst ein Heizelement 100 welches über zwei Verbindungsstücke 600 mit einem weiteren Heizelement 100 fluidleitend verbunden ist.

Durch den erfindungsgemäßen Aufbau der Bajonettverschlüsse ergibt sich ein Längsspiel L.

### Bezugszeichenliste

- 10: Leistenheizung
- 100: Heizmodul
- 110: erste Seite
- 120: zweite Seite
- 130: dritte Seite
- 131: erste Lamellen
- 132: Lamellentäler
- 133: dritte Lamellen
- 140: vierte Seite
- 141: Arm
- 142: Außenseite
- 143: gebogener Abschnitt
- 144: Volumen
- 150: Bereich
- 151: Volumen
- 152: erstes Ende
- 153: zweites Ende
- 155: Steg
- 160: Befestigungsabschnitte
- 170: erste Längsbohrungen
- 180: zweite Längsbohrungen
- 190: zweite Lamellen
- 191: Lamellenberge
- 192: Lamellentäler
- 193: dritte Lamellen
- 200: Haltebügel
- 210: Fuß
- 220: Haltekörper
- 221: Bohrung
- 222: Ausnehmungen
- 230: Arme
- 300: Eckabdeckung
- 400: Eckabdeckung
- 500: Endkappen
- 600: Verbindungsstück, insbesondere Fitting
- 610: erstes Verbindungselement, insbesondere des Verbindungsstückes
- 610a: äußeres Ende, insbesondere des ersten Verbindungselementes
- 610b: Körper, insbesondere des ersten Verbindungselementes
- 610c: inneres Ende, insbesondere des ersten Verbindungselementes
- 612: Aufnahme für Dichtungsringe
- 614: Verjüngung
- 620: zweites Verbindungselement, insbesondere des Verbindungsstückes
- 620a: äußeres Ende, insbesondere des zweiten Verbindungselementes
- 620b: Körper, insbesondere des zweiten Verbindungselementes
- 620c: inneres Ende, insbesondere des zweiten Verbindungselementes
- 622: Aufnahme für Dichtungsringe
- 624: Verjüngung
- 630: Bajonettverschluss, insbesondere des Verbindungsstückes
- 632: Bajonettring
- 632a: Öffnung im Bajonettring
- 634: Bajonettstift
- 700: Haltefeder
- 710: erstes Ende
- 711: erster Arm
- 712: dritter Arm
- 720: zweites Ende
- 721: zweiter Arm
- 722: vierter Arm
- 730: erster Abschnitt
- 740: zweiter Abschnitt
- 760: dritter Abschnitt
- 770: mittlerer Abschnitt
- 800: Wand
- K: Krümmung
- L: Längsspiel

## Patentansprüche

1. Verbindungsstück (600) für eine Leistenheizung (10), umfassend:
- ein erstes Verbindungselement (610); und
- ein zweites Verbindungselement (620), wobei
- das erste Verbindungselement (610) und das zweite Verbindungselement (620) über einen Bajonettverschluss (630) miteinander fluidleitend verbindbar sind.

2. Verbindungsstück (600) nach Anspruch 1, wobei
- der Bajonettverschluss (630) integraler Bestandteil des ersten und des zweiten Verbindungselementes ist.

3. Verbindungsstück (600) nach Anspruch 1 oder 2, wobei
- der Bajonettverschluss (630) derart ausgebildet ist, dass das zweite Verbindungselement (620) in dem ersten Verbindungselement (610) fluidleitend zur Anlage kommt.

4. Verbindungsstück (600) nach einem der vorstehenden Ansprüche, wobei
- der Bajonettverschluss (630) derart ausgebildet ist, dass das zweite Verbindungselement (620) ein Längsspiel (L) im ersten Verbindungselement (610) aufweist, welches orthogonal auf einer Drehachse des Bajonettverschlusses steht.

5. Verbindungsstück (600) nach einem der vorstehenden Ansprüche, wobei
- das erste Verbindungselement (610) und/oder das zweite Verbindungselement (620) im Wesentlichen oder abschnittweise rohrförmig oder zylindrisch ausgebildet sind.

6. Verbindungsstück (600) nach einem der vorstehenden Ansprüche, wobei
- das zweite Verbindungselement eine Krümmung (K) aufweist, die insbesondere so ausgeführt ist, dass die Öffnungen der Enden (620a, 620c) orthogonal zueinander angeordnet sind und/oder ein, das zweite Verbindungselemente (620, 620) durchfließendes Heizfluid abschnittsweise eine waagerechte und abschnittsweise eine senkrechte Flussrichtung aufweist.

7. Verbindungsstück (600) nach einem der vorstehenden Ansprüche, umfassend:
- zwei zweite Verbindungselemente (620, 620), die derart miteinander verbunden sind, dass ein, die zweiten Verbindungselemente (620, 620) durchfließendes Heizfluid abschnittsweise eine waagerechte Flussrichtung und abschnittsweise eine senkrechte Flussrichtung und abschnittsweise eine abermalige waagerechte Flussrichtung aufweist.

8. Verbindungsstück (600) nach einem der vorstehenden Ansprüche, umfassend:
zwei erste Verbindungselemente (610, 610) und zwei zweite Verbindungselemente (620, 620).

9. Verbindungsstück (600) nach einem der vorstehenden Ansprüche, wobei
- als Rohrverbinder (600) bzw. Fitting ausgebildet ist, um zwei Heizmodule (100) einer Leistenheizung (10) zu verbinden, insbesondere umfassend zwei erste Verbindungselemente (610, 610) und zwei zweite Verbindungselemente (620, 620).

10. Verbindungsstück (600) nach Anspruch 9, wobei
- ein zweites Verbindungselement (620f) weiblich und ein zweites Verbindungselement (620m) männlich ausgebildet sind, und die Verbindungselemente (620f, 620m) über einen integralen Bajonettverschluss (632, 634) miteinander verbunden sind.

11. Verbindungsstück (600) nach einem der vorstehenden Ansprüche, wobei
- das erste Verbindungselement (610) eine Verjüngung (614) aufweist, die dazu eingerichtet ist, in einer Längsbohrung (170, 180) eines Heizmodul (100) der Leistenheizung (10) nach einem der Ansprüche 1 bis 10 fluidleitend zur Anlage zu kommen.

12. Leistenheizung mit wenigstens einem Verbindungsstück nach einem der Ansprüche 1 bis 11.

13. Leistenheizung nach Anspruch 12, wobei das Verbindungsstück zwei Heizmodule miteinander fluidleitend verbindet.
